# EUROPEAN PATENT APPLICATION

(11) **EP 4 613 570 A1**
(43) Date of publication of application: **10.09.2025**
(21) Application number: 23900338.7
(22) Date of filing: 26.10.2023
(51) Int. Cl.: B60R 21/231, B60R 21/205

(54) **OCCUPANT RESTRAINT APPARATUS**

(30) Priority: 05.12.2022 JP 2022194432
(71) Applicant: Autoliv Development AB, 44783 Vargarda (SE)
(72) Inventor: OKUGAWA, Shota, Yokohama-shi, Kanagawa 222-8580 (JP); SUZUKI, Yoshikazu, Yokohama-shi, Kanagawa 222-8580 (JP)
(74) Representative: Feucker, Max Martin
(86) International application number: PCT/JP2023/038732
(87) International publication number: WO 2024/122216

(57) **Abstract**

To provide an occupant-restraining device capable of ensuring the deployment performance of an airbag cushion even if a vehicle accessory is provided above an instrument panel. An occupant-restraining device 10 includes an airbag cushion 12 that expands and deploys in the event of a vehicle emergency from an instrument panel 20 located at the front of a vehicle inside the vehicle cabin toward a passenger P. When fully expanded and deployed, the airbag cushion 12 has, in side surface view: a front end part 31 on the front side of the vehicle; a rear end part 32 on an opposite side to the front end part 31; and a constricted part 33 positioned between the front end part 31 and the rear end part 32 in an upper region of the instrument panel 20. The position of the constricted part 33 in a front-rear direction of the vehicle corresponds to the position of a vehicle accessory, such as a navigation monitor 24 or the like, that protrudes in an upper direction from the instrument panel 20.

## Description

### TECHNICAL FIELD

The present invention relates to an occupant-restraining device including an airbag cushion that expands and deploys in the event of a vehicle emergency from an instrument panel located at the front of a vehicle inside the vehicle cabin toward a passenger.

### BACKGROUND ART

A variety of airbag panel configurations are known for an airbag cushion for this type of occupant-restraining device. For example, the airbag cushion in Patent Document 1 is configured by connecting a sub bag to a side surface part of a main bag on an inner side in a vehicle width direction. When expanded and deployed, the main bag is positioned almost directly in front of an occupant in a front passenger seat. The sub bag is configured to expand and deploy by receiving an inflow of gas from the main bag when the occupant comes into contact with the main bag.

### RELATED ART DOCUMENTS

### PATENT DOCUMENTS

Patent Document 1: Japanese Unexamined Patent Application Publication 2019-031159

### SUMMARY OF THE INVENTION

### PROBLEM TO BE SOLVED BY THE INVENTION

However, in a potential future vehicle, a vehicle accessory, such as a relatively large display or the like, may be positioned on an upper side of an instrument panel. In this regard, Patent Document 1 does not take such a perspective into consideration.

An object of the present invention is to provide an occupant-restraining device capable of ensuring the deployment performance of an airbag cushion even if a vehicle accessory is positioned on an upper side of an instrument panel.

### MEANS FOR SOLVING THE PROBLEM

An occupant-restraining device according to one aspect of the present invention is an occupant-restraining device including an airbag cushion that expands and deploys in the event of a vehicle emergency from an instrument panel located at the front of a vehicle inside the vehicle cabin toward a passenger, wherein the fully expanded and deployed airbag cushion has, in side surface view: a front end part on a front side of the vehicle; a rear end part on an opposite side from the front end part; and a constricted part positioned between the front end part and the rear end part and in an upper region of the instrument panel.

According to this aspect, even if a vehicle accessory is positioned on an upper side of the instrument panel, the airbag cushion can suppress interference with the vehicle accessory by the constricted part. On the other hand, it is also possible to suppress interference while causing the constricted part to function as a receiving part for receiving a reaction force of the expansion and deployment from the vehicle accessory, thereby directing the direction of expansion and deployment in a desired direction. Therefore, even if a vehicle accessory is positioned on the upper side of the instrument panel, the expansion and deployment of the airbag cushion is not impaired, and the deployment performance of the airbag cushion can be ensured. The position of a minimum constricted part, where the cross-sectional area of the constricted part is smallest, may be set to substantially coincide with the position of a maximum protruding part of the vehicle accessory.

### BRIEF DESCRIPTION OF THE DRAWINGS

FIG. 1 is a side surface view depicting a fully expanded and deployed airbag cushion together with an instrument panel and a passenger, in an occupant-restraining device according to Embodiment 1;
FIG. 2 is an enlarged side surface view of the fully expanded and deployed airbag cushion of FIG. 1;
FIG. 2A is a diagram depicting an upper surface view of a cross section along lines IIA-IIA in FIG. 2;
FIG. 3A is a side surface view depicting the fully expanded and deployed airbag cushion together with a navigation monitor, according to Embodiment 1;
FIG. 3B is a plan view of FIG. 3A;
FIG. 3C are cross-sectional views cut out at each line in FIG. 3A;
FIG. 4A is an example depicting a center panel of the airbag cushion according to Embodiment 1;
FIG. 4B is an example depicting a first side panel of the airbag cushion according to Embodiment 1;
FIG. 4C is an example depicting a second side panel of the airbag cushion according to Embodiment 1;
FIG. 4D is a side surface view of the fully expanded and deployed airbag cushion according to Embodiment 1;
FIG. 5 are side surface views depicting over time how an airbag cushion is expanded and deployed in the occupant-restraining device according to Embodiment 1;
FIG. 6 are diagrams depicting over time how an airbag cushion is expanded and deployed in the occupant-restraining device according to Embodiment 1, and are front surface views viewed from the rear of the vehicle in the front-rear direction;
FIG. 7A is an example depicting a center panel of the airbag cushion according to Embodiment 2;
FIG. 7B is an example depicting a first side panel of the airbag cushion according to Embodiment 2;
FIG. 7C is an example depicting a second side panel of the airbag cushion according to Embodiment 2;
FIG. 8A is a cross-sectional view of the fully expanded and deployed airbag cushion according to Embodiment 2, which is cut out at the position of lines A-A in FIG. 3A; and
FIG. 8B is an enlarged view of the 8B portion of FIG. 8A.

### EMBODIMENTS OF THE INVENTION

### <Definition of Terms and Overview of Embodiments>

Occupant-restraining devices according to preferred embodiments of the present invention will be described with reference to the attached drawings. In the present document, up and down, left and right, and front and rear are defined as follows. When a passenger is seated in a seat in a regular posture, the direction in which the passenger faces is referred to as the front, and the opposite direction is referred to as the rear, and a direction indicating a coordinate axis is referred to as the front-rear direction or vehicle front-rear direction. Furthermore, when the passenger is seated in the seat in a regular posture, the right side of the passenger is referred to as the right direction, the left side of the passenger is referred to as the left direction, and a direction indicating a coordinate axis is referred to as the left-right direction or vehicle width direction. Similarly, when the passenger is seated in a regular posture, a head direction of the passenger is referred to as up, a waist direction of the passenger is referred to as down, and a direction indicating a coordinate axis is referred to as an up-down direction.

Furthermore, "occupant" or "passenger" in the present document is an occupant/passenger in accordance with a frontal collision test dummy (Hybrid III AM50; human body dummy for frontal collision test set forth in specification [49CFR Part 572 Subpart E and O] of NHTSA [National Highway Traffic Safety Administration]) with a physique equivalent to the average male in the United States, having an approximate size of 175 cm height, 88 cm sitting height, and 78 kg weight.

The occupant-restraining device according to an embodiment includes an airbag cushion that expands and deploys in the event of a vehicle emergency from an instrument panel (hereinafter, referred to as instrument panel) located at the front of a vehicle inside the vehicle cabin toward a passenger (e.g., a passenger in a front passenger seat). The airbag cushion is normally folded or rolled up and stowed within the instrument panel. In the event of a vehicle emergency, the airbag cushion is supplied with gas from an inflator and expands and deploys on an inner side of the windshield (front glass) toward the passenger. A vehicle emergency may be, for example, a collision at the front of the vehicle or the like, a rollover, or the like, but is not limited thereto.

Furthermore, the occupant-restraining device also includes a vehicle accessory that protrudes in the upper direction from the instrument panel. A representative vehicle accessory is a navigation monitor, but is not limited thereto. For example, the vehicle accessory may be a touch display, a meter panel, a controller for air conditioning or the like, a speaker, or the like, or may be a holder or stand for setting a mobile communication device (e.g., an iPhone (registered trademark)), or the like. Hereinafter, a navigation monitor is described as an example of the vehicle accessory.

The navigation monitor is usually disposed near the center of the front of the vehicle in the vehicle cabin. However, if the navigation monitor is larger, a portion of the navigation monitor may protrude in the upper direction from the instrument panel. In the occupant-restraining device of the present embodiment, in order to take into account and/or utilize the protruding portion of the navigation monitor, a constricted part is formed in the fully expanded and deployed airbag cushion, thereby ensuring the deployment performance of the airbag cushion.

### <Embodiment 1 of Occupant-restraining Device>

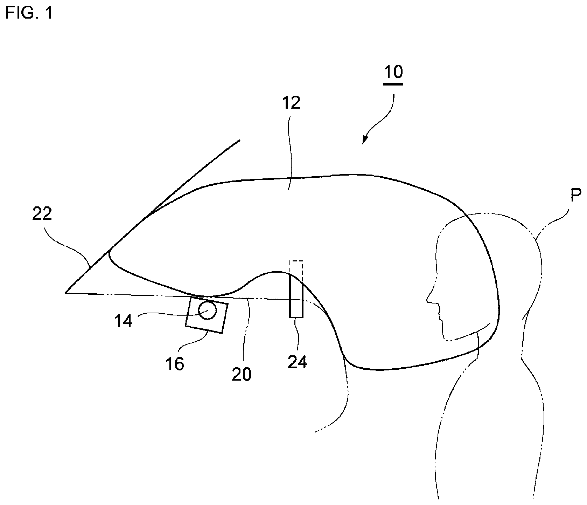

As depicted in FIG. 1, an occupant-restraining device 10 includes an airbag cushion 12 that expands and deploys in the event of a vehicle emergency. The airbag cushion 12 is supplied with gas from an inflator 14 and expands and deploys toward a passenger P from an instrument panel 20 located at the front of a vehicle in a vehicle cabin. At this time, the airbag cushion 12 expands and deploys on an inner side of the windshield 22. In other words, the airbag cushion 12 expands and deploys into a space surrounded by the instrument panel 20, the windshield 22, and the passenger P.

The airbag cushion 12 is normally folded and stowed in a housing 16, and the inflator 14 is secured to the housing 16. The housing 16 is attached to the vehicle inside the instrument panel 20. The housing 16 may have or be coupled with a cover that includes a seam or the like through which the airbag cushion 12 may be deployed. The housing 16 is, for example, a shallow case that is open at an upper side, and applies a reaction force to the airbag cushion 12 when the airbag cushion 12 expands and deploys. In the occupant-restraining device 10, the airbag cushion 12, inflator 14, housing 16, and the like form a modularized airbag device, and such airbag device is stowed inside the instrument panel 20.

The inflator 14 is electrically connected to a vehicle-side ECU. For example, in the event of a vehicle emergency, the inflator 14 receives a signal that a collision or impact has been detected from the vehicle-side ECU and operates to instantly supply the gas to the airbag cushion 12. The inflator 14 can be one of various types of inflators, such as inflators filled with a gas-generating agent, compressed gas, or both, and the like. By way of example, the inflator 14 has an igniting device at an open end part of a cylindrical body with a bottom. Furthermore, when a gas-generating agent in the cylindrical body is ignited using the igniting device, gas is generated, and the gas for expansion and deployment is supplied into the airbag cushion 14 from a plurality of discharge holes located on a peripheral surface of the cylindrical body.

The occupant-restraining device 10 also includes a navigation monitor 24 (vehicle accessory) that protrudes in the upper direction from the instrument panel 20. The navigation monitor 24 is disposed, for example, near the center of the front of the vehicle in the vehicle cabin. A portion of the navigation monitor 24 is positioned on a front surface side of the passenger when viewed from the center in the vehicle width direction. Furthermore, a portion of the navigation monitor 24 is positioned in a space on an upper side from the instrument panel 20.

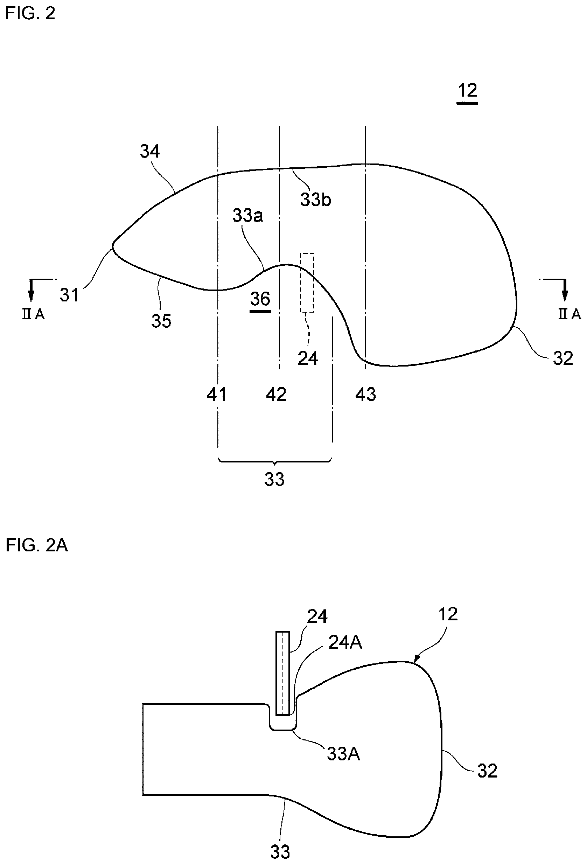

FIG. 2 is an enlarged view of the fully expanded and deployed airbag cushion 12. As depicted in FIG. 2, the airbag cushion 12 has, in side surface view: a front end part 31 on the front side of the vehicle; a rear end part 32 on an opposite side to the front end part 31; and a constricted part 33 positioned between the front end part 31 and the rear end part 32 in an upper region of the instrument panel 20. Furthermore, the airbag cushion 12 has, in side surface view: an upper part 34 connecting upper portions of the front end part 31 and the rear end part 32; and a lower part 35 connecting lower portions of the front end part 31 and the rear end part 32. The front end part 31 faces the windshield 22 and can contact the windshield 22 (see FIG. 1). On the other hand, the rear end part 32 faces the passenger P and can contact the passenger P (see FIG. 1).

The constricted part 33 is a portion in an intermediate part of the airbag cushion 12, and is narrower or recessed in the up-down direction and/or left-right direction compared to portions in front of and behind the constricted part 33. For example, as depicted in FIG. 2, the constricted part 33 is thinner in side surface view or narrower in the up-down direction than portions in front of and behind the constricted part 33.

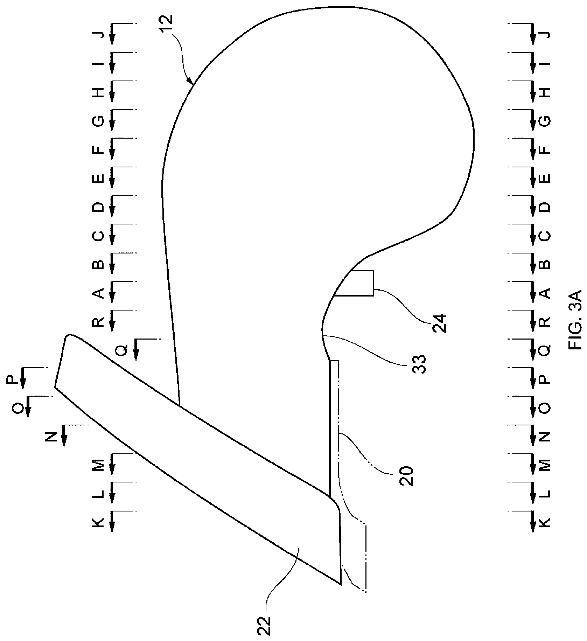

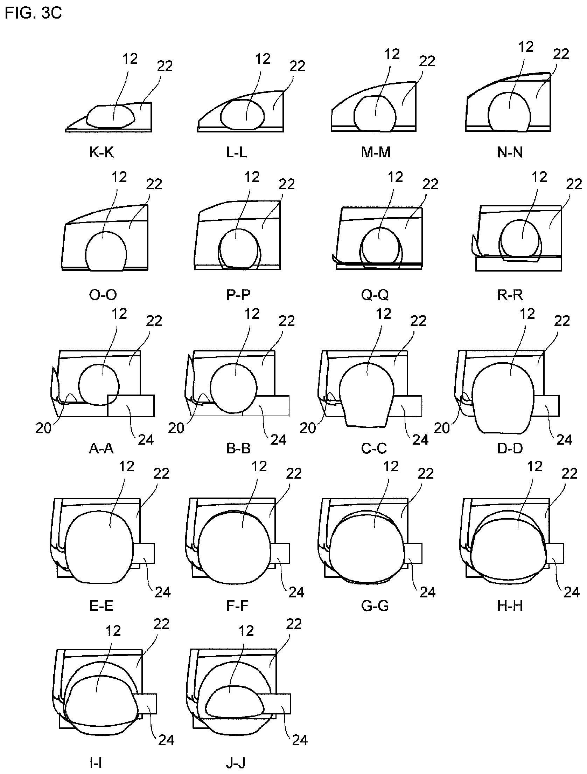

Note that the intermediate part of the airbag cushion 12 refers to a portion of the airbag cushion 12 expanded and deployed between the front end part 31 and the rear end part 32, the portion being from the rearmost end part of the housing 16 in which the airbag cushion 12 is stowed in side surface view (e.g., near cross sections O-O and P-P in FIGS. 3A and 3C) to a portion of the airbag cushion 12 that has the largest cross section (e.g., near cross sections D-D, E-E, and F-F in FIGS. 3A and 3C).

Furthermore, for example, as depicted in FIG. 2A, which is an upper surface view of the cross section along line IIA-IIA in FIG. 2, the constricted part 33 can include a portion which is narrowed both in cross section and in the left-right direction. As one example, the position of a minimum constricted part 33A, where the cross-sectional area of the constricted part 33 is the smallest, may be set to approximately coincide with the position of a maximum protruding part of the vehicle accessory (e.g., a maximum protruding part 24A of the navigation monitor 24), and may be set to avoid the protruding part.

From another perspective, it can be said that the cross-sectional area of the cross section orthogonal to the front-rear direction of the vehicle changes between the front end part 31 and the rear end part 32 of the airbag cushion 12, and the constricted part 33 is formed by the portion with the smallest cross-sectional area and the portions in front of and behind said portion, where the cross-sectional area gradually decreases toward said portion.

On the basis of this change in the cross-sectional area, when the fully expanded and deployed airbag cushion 12 is demarcated along the front-rear direction of the vehicle, the airbag cushion 12 is demarcated into a first portion 41, a second portion 42, and a third portion 43. Specifically, the cross-sectional area gradually increases from the front end part 31 to the first portion 41, gradually decreases from the first portion 41 to the second portion 42, gradually increases from the second portion 42 to the third portion 43, and gradually decreases from the third portion 43 to the rear end part 32.

The constricted part 33 is formed in front of and behind the second portion 42 with the second portion 42 as the center. Herein, the constricted part 33 is formed in a range from the first portion 41 through the second portion 42 to a portion between the second portion 42 and the third portion 43. **In** side surface view, the length of the constricted part 33 in the front-rear direction is 1/3 or less of the length of the airbag cushion 12 in the front-rear direction. **If** the length exceeds 1/3, the airbag cushion 12 may be deformed (e.g., bent) at the position of the constricted part 33 due to a reaction force from the passenger P during restraint, which may impair the restraining performance.

The constricted part 33 forms a portion where a bottom surface of the airbag cushion 12 is raised in a direction away from the instrument panel 20. Therefore, a space 36 is defined between the constricted part 33 and the instrument panel 20.

In side surface view, a lower part 33a of the constricted part 33 is narrower toward the inside of the airbag cushion 12 than an upper part 33b. However, in other embodiments, the lower part 33a and upper part 33b can also be narrowed. However, from the perspective of preventing deformation (e.g., bending) due to a reaction force from the passenger P during restraint, the upper part 33b is preferably flatter than the lower part 33a. Furthermore, when the airbag cushion 12 is deploying and/or has been deployed, the upper part 33b comes into contact with the windshield 22, so from the perspective of ease of receiving a reaction force from the windshield 22, the upper part 33b is preferably flatter than the lower part 33a.

The lower part 33a of the constricted part 33 forms a portion of the bottom surface of the airbag cushion 12 and is curved upward. Herein, in side surface view, a front part of the lower part 33a is formed so as to rise obliquely to the rear, and a rear part of the lower part 33a is formed so as to rise obliquely to the front.

The upper part 33b of the constricted part 33 forms a portion of a top surface of the airbag cushion 12, and extends parallel or essentially parallel to the front-rear direction of the vehicle. Herein, in side surface view, the upper part 33b is slightly inclined upward toward the rear, but is substantially flat in comparison with the lower part 33a.

Furthermore, in side surface view, the constricted part 33 is positioned on the vehicle front side relative to the center of the airbag cushion 12 in the front-rear direction of the vehicle. With respect to the navigation monitor 24, the position of the constricted part 33 in the front-rear direction of the vehicle corresponds to the position of the navigation monitor 24. Specifically, the navigation monitor 24 is positioned directly below the constricted part 33. Herein, the second portion 42 is positioned slightly further to the vehicle front side as compared to the navigation monitor 24.

The constricted part 33 may be provided at a position where contacting the navigation monitor 24. The airbag cushion 12 has the constricted part 33 such that interference with the navigation monitor 24 is suppressed. On the other hand, when the airbag cushion 12 expands and deploys, the portion forming the constricted part 33 comes into contact with the navigation monitor 24, and the reaction force of the expansion and deployment is applied to said portion. In other words, the constricted part 33 functions as a receiving part for receiving the reaction force of the expansion and deployment from the navigation monitor 24, and can contribute to directing the expansion and deployment of the airbag cushion 12 in a desired direction.

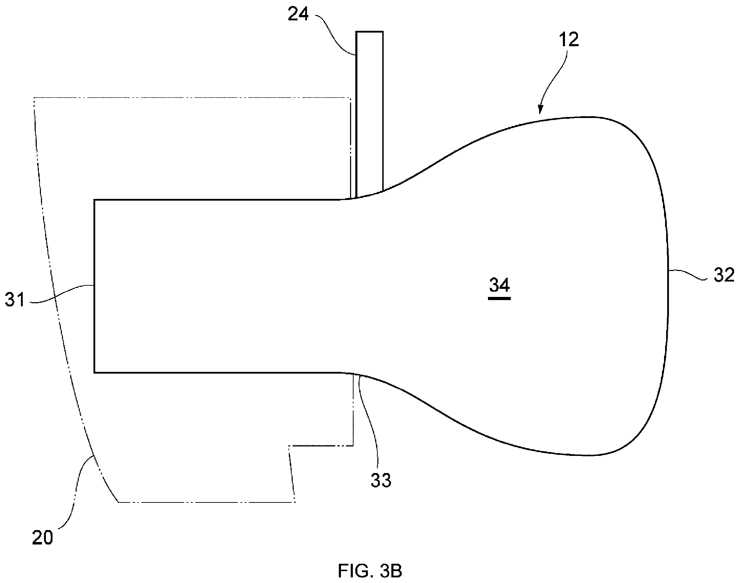

FIGS. 3A and 3B respectively depict an example of a side surface view and a plan view of the fulled expanded and deployed airbag cushion 12 together with the navigation monitor 24. Lines P-P in FIG. 3A are at a position corresponding to the first portion 41 in FIG. 2. Similarly, lines Q-Q are at a position corresponding to the second portion 42, and lines E-E are at a position corresponding to the third portion 43. The navigation monitor 24 is positioned on lines A-A. FIG. 3C depicts cross-sectional views cut out at each line in FIG. 3A. As depicted in FIG. 3C, the cross-sectional area of the airbag cushion 12 varies along the front-rear direction of the vehicle, as described above.

Furthermore, as depicted in FIG. 3B, the constricted part 33 is narrower than the front end part 31 and the rear end part 32 in plan view. In plan view, the airbag cushion 12 gradually becomes wider from the constricted part 33 to midway toward the rear end part 32.

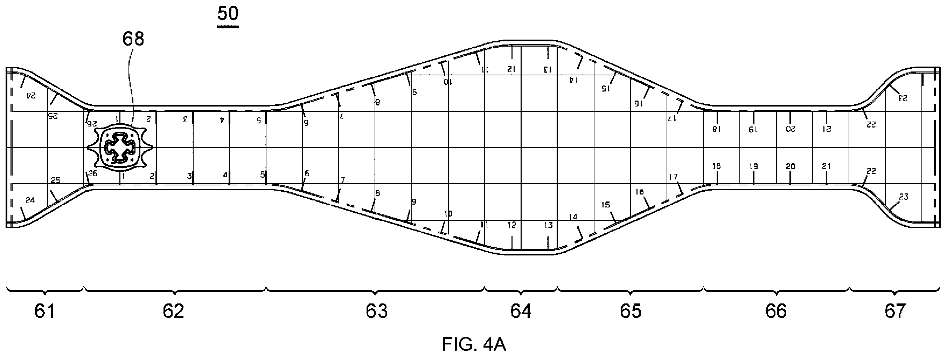

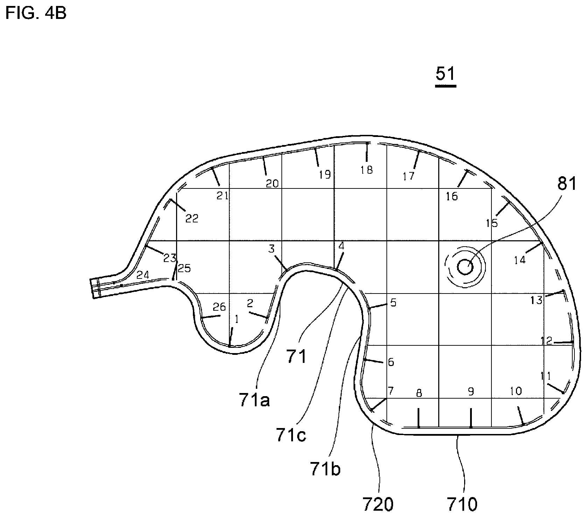

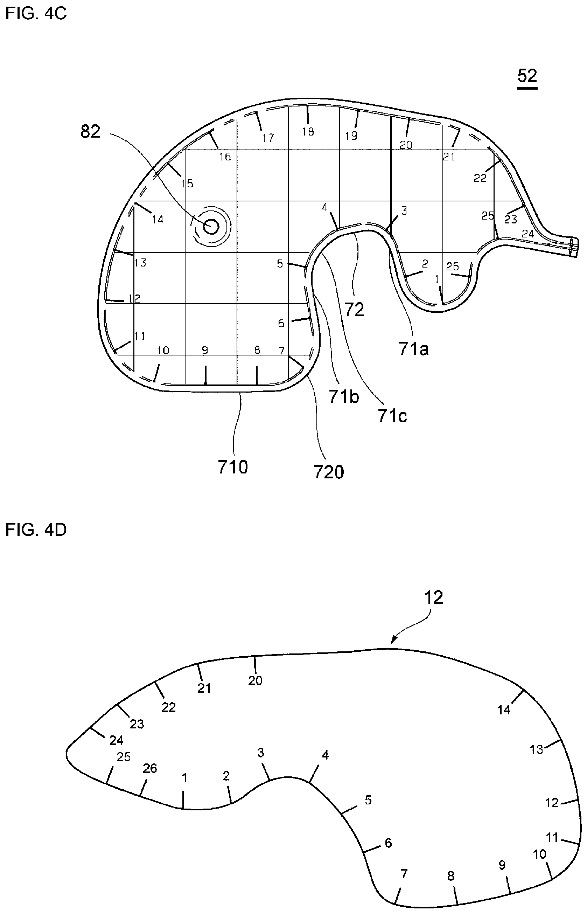

FIGS. 4A to 4D are plan views depicting a panel configuration of the airbag cushion 12. The panel configuration includes a center panel 50 of FIG. 4A, a first side panel 51 in FIG. 4B, and a second side panel 52 in FIG. 4C. Each of the panels 50 to 52 is made of a nonwoven fabric or other fabric.

The center panel 50 and the side panels 51, 52 are joined (e.g., by stitching, adhering, fusing, or the like) at appropriate positions to form the airbag cushion 12 having an expandable chamber. Herein, the side panels 51, 52 are joined to the inner and outer sides of the center panel 50 in the vehicle width direction, respectively. In FIGS. 4A to 4C, numbers 1 to 26 present in each of the panels 50, 51, 52 indicate the locations where the center panel 50 and the side panel 51 or 52 are joined together when the panels are joined. For reference, these numbers are also present in FIG. 4D.

As depicted in FIG. 4A, the center panel 50 is made of a single panel, is folded back, and has two end parts joined in a longitudinal direction. When fully expanded and deployed, the center panel 50 includes the front end part 31, rear end part 32, upper part 34, and lower part 35. In other embodiments, the center panel 50 may be two or more panels joined together.

The center panel 50 has in order, from a first end side to a second end side in the longitudinal direction, a first width change part 61, a first straight part 62, a third width change part 63, an enlarged part 64, a fourth width change part 65, a second straight part 66, and a fifth width change part 67.

The first width change part 61 and the fifth width change part 67 are formed so as to narrow toward the first straight part 62 and the second straight part 66, respectively. The first width change part 61 and the fifth width change part 67 configure the front end part 31 and a portion in the vicinity thereof when expansion and deployment are complete.

The third width change part 63 and the fourth width change part 65 are formed so as to widen from the first straight part 62 and the second straight part 66 toward the enlarged part 64, respectively. The first straight part 62 and the third width change part 63 configure most of the lower part 35 and the rear end part 32 when expansion and deployment are complete. The fourth width change part 65 and the second straight part 66 configure most of the upper part 34 when expansion and deployment are complete.

The first straight part 62 has a gas introduction part 68 for introducing gas from the inflator 14 at a position on the first width change part 61 side. A portion or most of each of the first straight part 62 and the second straight part 66 configure the lower part 33a and the upper part 33b of the constricted part 33 when expansion and deployment are completed. For example, the portion of the first straight part 62 from the numbers 3 to 5 configure most of the lower part 33a of the constricted part 33.

The enlarged part 64 is a portion of the center panel 50 that is most expanded (widest) in the vehicle width direction. The enlarged part 64 has the same width and a prescribed length. Herein, the length of the enlarged part 64 is shorter than the lengths of other component parts (61 to 63 and 65 to 67) of the center panel 50. The enlarged part 64 constitutes a portion immediately above the rear end part 32 when expansion and deployment are complete. The enlarged part 64, together with the fourth width change part 65, becomes a portion that faces the passenger P when expansion and deployment are complete.

As depicted in FIGS. 4B and 4C, the side panels 51, 52 are each made of a single panel, and a peripheral edge part of each are joined to each side of the center panel 50 in the width direction. The side panels 51, 52 can be formed to have a paired (symmetrical) shape. However, in other embodiments, different shapes may be used. This point will be described later in Embodiment 2.

The side panels 51, 52 constitute both side portions of the fully expanded and deployed airbag cushion 12 in the vehicle width direction. Therefore, the shape of the side panels 51, 52 is formed to be the same as the shape of the fully expanded and deployed airbag cushion 12, in side surface view (see FIGS. 2 and 4D).

In particular, the shape of the side panels 51, 52 is formed to correspond to the constricted part 33 of the fully expanded and deployed airbag cushion 12. For example, the side panels 51, 52 have recessed parts 71 and 72 for forming the lower part 33a of the constricted part 33, respectively. The recessed parts 71, 72 are formed in lower parts of the side panels 51, 52. Portions of the side panels 51, 52 which demarcate the recessed parts 71, 72, are curved upwardly, similar to the lower part 33a of the constricted part 33. The positions of the recessed parts 71, 72 are between the enlarged part 64 and the gas introduction part 68, with respect to the center panel 50 (positions corresponding to the first straight part 62).

The side panels 51, 52 have corner portions 720, which are connected to lower sides of vehicle rear-side portions in which the recessed parts 71, 72 are formed, protrude toward the front of the vehicle. Specifically, the recessed part 71 of the side panel 51 is configured from a front part 71a (portion from number 2 to number 3), a rear part 71b (portion from number 5 to number 6; rear-side portion of the vehicle), and an upper part 71c (portion from number 3 to number 5) connecting the front part 71a and the rear part 71b. Herein, the rear part 71b is slightly inclined downward and to the front. Furthermore, a corner portion 720 (portion from just before number 6 to just before number 8) is provided on the extension of the rear part 71b, and the corner portion 720 is connected to a bottom part 710 of the side panel 51 (portion just before number 8 to just before number 10) towards the rear. As a result of the rear part 71b being inclined downward toward the front as described above, the corner portion 720 has a protruding shape that bulges out toward the front of the vehicle. Such a protruding shape can prevent the airbag cushion 12 from swinging in the up-down direction (prevent flapping) during expansion and deployment. Note that the same applies to the recessed part 72 of the side panel 52.

The side panels 51, 52 have vent holes 81, 82 formed on rear sides thereof. When the fully expanded and deployed airbag cushion 12 contacts the passenger P, gas inside the airbag cushion 12 is allowed to escape to the outside through the vent holes 81, 82. As a result, the restraint of the passenger P by the airbag cushion 12 is softened.

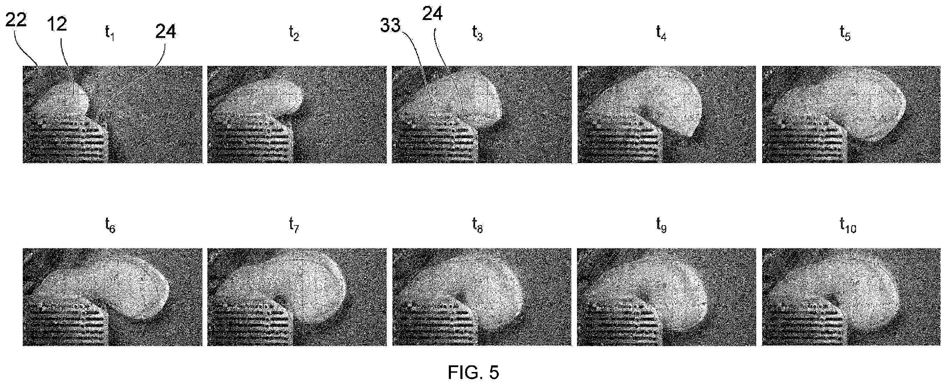

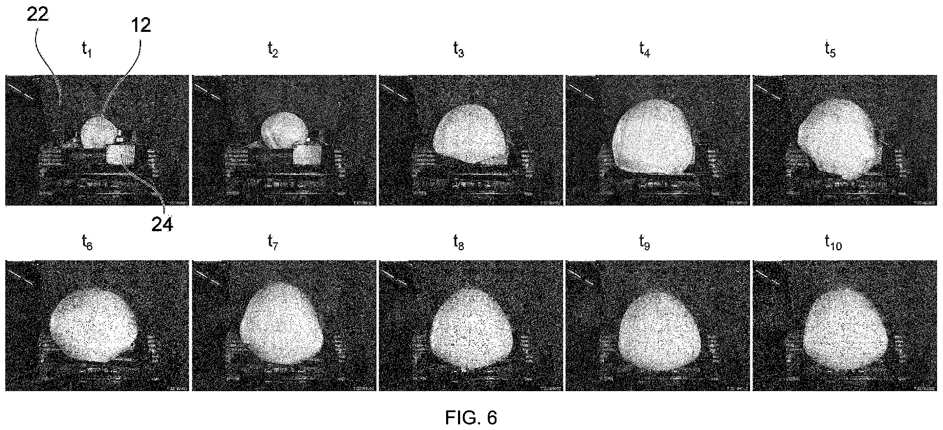

Next, an example of how the airbag cushion 12 expands and deploys in the occupant-restraining device 10 will be described with reference to FIGS. 5 and 6. When the supply of gas from the inflator 14 begins, the airbag cushion 12 begins to expand and deploy, and is exposed to the outside of the instrument panel 20. At this time, the airbag cushion 12 deploys such that the side panels 51, 52 instantly rise up, and an upper part on the front side of the center panel 50 (second straight part 66 and the fifth width change part 67) instantly collides with the windshield 22 (see t1 in the drawings). Note that an example of t1 is 10 ms, and t2 and thereafter are timings after intervals of, for example, 5 ms.

The airbag cushion 12 receives reaction forces from the windshield 22 and the housing 16, and expands and deploys toward the passenger P (see t2 in the drawings). Furthermore, thereafter, the constricted part 33 receives a reaction force from the navigation monitor 24, and the airbag expands and deploys toward the passenger P (see t3 and t4 in the drawings). The airbag cushion 12 reaches a deployed shape having a sufficient width, for example, at approximately t3 from the start of supply, and contacts the passenger P at approximately t4 from the start of supply, absorbing the impact of the passenger P and restraining the passenger P.

When the airbag cushion 12 is fully expanded and deployed (see t10 in the drawings), the airbag cushion 12 assumes the expanded and deployed shape depicted in FIG. 2, with the constricted part 33 positioned in an upper region of the instrument panel 20 at a position corresponding to the position of the navigation monitor 24.

The occupant-restraining device 10 according to the embodiment described above includes the airbag cushion 12 that expands and deploys in the event of a vehicle emergency from the instrument panel 20 located at the front of the vehicle inside the vehicle cabin toward the passenger P. Moreover, the fully expanded and deployed airbag cushion 12 has, in side surface view: the front end part 31 on the front side of the vehicle; the rear end part 32 on an opposite side from the front end part 31; and the constricted part 33 positioned between the front end part 31 and the rear end part 32 and in the upper region of the instrument panel 20.

With such configuration, even if a vehicle accessory (navigation monitor 24) is provided above the instrument panel 20, the airbag cushion 12 can expand and deploy by receiving a reaction force of expansion and deployment from the navigation monitor 24 while being suppressed from interfering with the navigation monitor 24 by the constricted part 33. Therefore, even if the navigation monitor 24 is positioned above the instrument panel 20, the expansion and deployment of the airbag cushion 12 is not impaired, and the deployment performance of the airbag cushion 12 can be ensured.

Next, other embodiments will be described. Note that another embodiment will be described with a focus on differences from the embodiment above. Configurations common to the embodiment above will be denoted by the same or similar reference numerals and descriptions thereof will be omitted.

### <Embodiment 2 of Occupant-restraining Device>

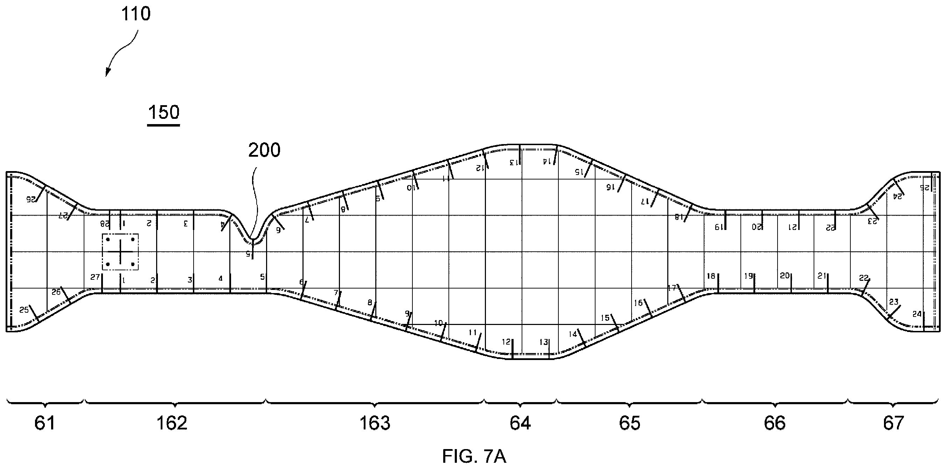

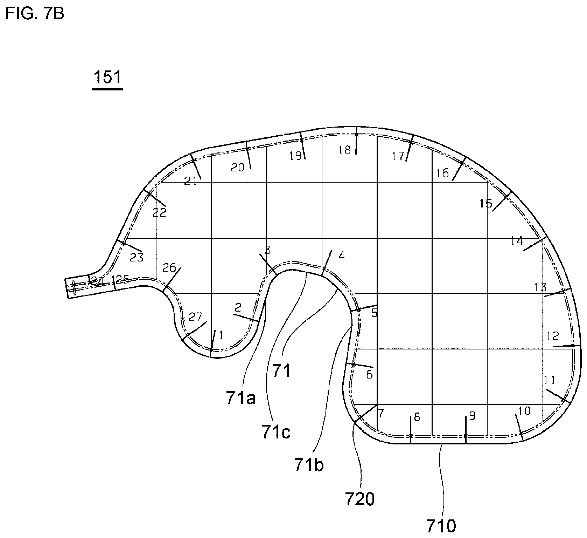

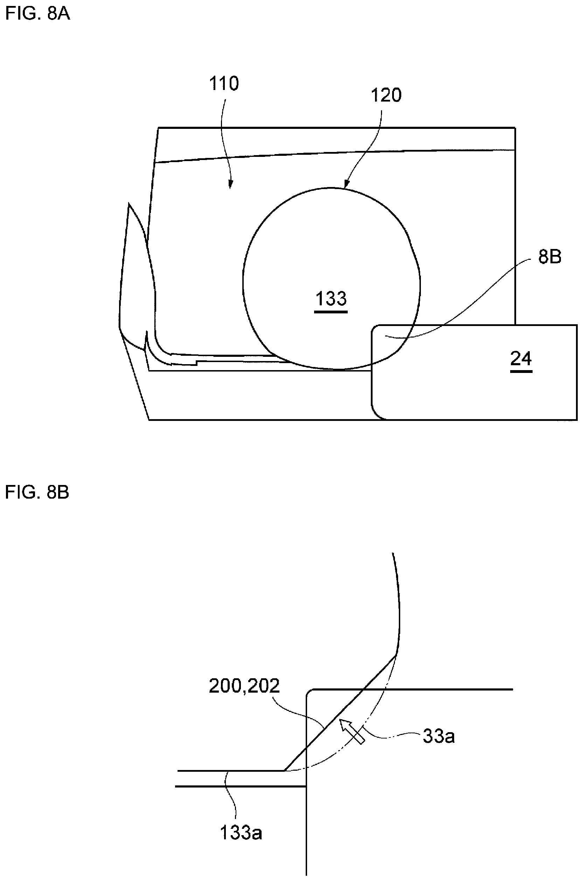

In an occupant-restraining device 110 according to Embodiment 2 depicted in FIGS. 7A to 7C and 8A and 8B, the panel configuration of an airbag cushion 120 is such that a center panel 150 and a second side panel 152 are provided with notch parts 200, 202, respectively. Unlike the Embodiment 1, side panels 151 and 152 are not symmetrical. The side panel 151 has the same configuration as the side panel 51 of Embodiment 1, but compared to the configuration of the side panel 52 of Embodiment 1, the side panel 152 has the notch part 202 added to a portion of a recessed part 172.

As depicted in FIG. 7A, the notch part 200 of the center panel 150 is formed on a first end side in the vehicle width direction (herein, inner side in the vehicle width direction) of a first straight part 162. The notch part 200 is curved in a substantially U-shape toward the center line of the first straight part 162. The position of the notch part 200 in the front-rear direction corresponds to an end part of the first straight part 162 that is connected to a third width change part 163. The notch part 200 constitutes a portion that is at least half in the vehicle width direction of a lower part 133a of a constricted part 133 when expansion and deployment are complete.

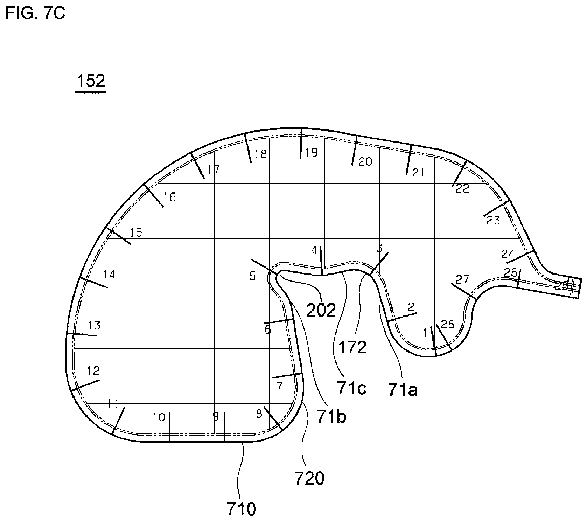

As depicted in FIG. 7C, the notch part 202 of the side panel 152 is formed, for example, at a rear-side corner part of the recessed part 172. The notch part 202 is curved in a substantially U-shape toward the inside of the side panel 152. The position of the notch part 202 corresponds to the position of the notch part 200. Although not particularly depicted, a ribbon-like or patch-like reinforcing fabric may be added at a stitching position of the notch part 200 and the notch part 202. This is because, when the airbag cushion expands and deploys, there is a possibility that a higher stress will be locally applied to this notch portion than to another portion.

FIG. 8A depicts a cross-sectional view of the fully expanded and deployed airbag cushion 120, cut out along lines A-A in FIG. 3A (i.e., position where the navigation monitor 24 is located). FIG. 8B depicts an enlarged view of portion 8B in FIG. 8A. Furthermore, for the sake of comparison, FIG. 8B also depicts a cross section of the airbag cushion 12 according to Embodiment 1.

As depicted in FIG. 8B, a lower part of the airbag cushion 120 has a cross section that is carved to the inner side, as compared to the airbag cushion 12. This is because the airbag cushion 120 has the notch parts 200, 202 formed at the position of the lower part 133a of the constricted part 133. This reduces the amount of interference with the navigation monitor 24 when the airbag cushion 120 is expanded and deployed, making it possible to suppress tilting of the airbag cushion 120 during expansion and deployment.

Thus, in Embodiment 2, the fully expanded and deployed airbag cushion 120 is formed such that, when viewed from the front-rear direction of the vehicle, a cross section orthogonal to the front-rear direction of the vehicle is asymmetrical at the position of the constricted part 133. **In** particular, when viewed from the front-rear direction of the vehicle, the asymmetric cross section is such that a first side (herein, inner side in the vehicle width direction), where the navigation monitor 24 occupies a larger proportion, is more recessed toward the inside of the airbag cushion 120 than a second side (herein, outer side in the vehicle width direction).

As in Embodiment 2, taking into consideration the position, size, and proportion occupied by the navigation monitor 24 in the vehicle width direction, by making the cross section at the position of the constricted part 133 asymmetrical, the reaction force that the airbag cushion 120 receives from the navigation monitor 24 during expansion and deployment can be reduced, and the tilt of the airbag cushion 120 during expansion and deployment can be suppressed. As a result, similarly to the Embodiment 1, the expansion and deployment of the airbag cushion 120 is not impaired, and the deployment performance of the airbag cushion 120 can be ensured. Furthermore, making the cross section asymmetrical eliminates the need to use a tether.

The embodiments described above are for ease of understanding of the present invention and are not intended to be construed as limiting the present invention. Each element provided in each embodiment and the arrangement, materials, conditions, shape, size, and the like thereof are not limited to those exemplified and can be changed as appropriate, and the configurations of each embodiment can be combined with each other.

For example, in Embodiment 1, the constricted part 33 has been described as being narrower or recessed in the up-down direction compared to portions in front of and behind the constricted part 33, but in addition to or separately thereto, the constricted part 33 may also be narrower or recessed in the left-right direction. For example, the constricted part 33 may be thinner in upper surface view or narrower in the left-right direction than portions in front of and behind the constricted part 33. Furthermore, the constricted part 33 may be more recessed toward the inside of the airbag cushion 12 on a first side (e.g., inner side in the vehicle width direction) than on a second side (outer side in the vehicle width direction) in upper surface view.

### <Additional Considerations for Various Embodiments>

### [Embodiment 1]

An occupant-restraining device, including an airbag cushion that expands and deploys in the event of a vehicle emergency from an instrument panel located at the front of a vehicle inside the vehicle cabin toward a passenger, wherein
the fully expanded and deployed airbag cushion has, in side surface view:
a front end part on a front side of the vehicle;
a rear end part on an opposite side from the front end part; and
a constricted part positioned between the front end part and the rear end part and in an upper region of the instrument panel.

### [Embodiment 2]

The occupant-restraining device according to Embodiment 1, wherein the constricted part is, in a side surface view, constricted toward the inside of the airbag cushion at a lower part rather than an upper part.

### [Embodiment 3]

The occupant-restraining device according to Embodiment 1, wherein the constricted part is, in an upper surface view, recessed toward the inside of the airbag cushion on a first side rather than a second side.

### [Embodiment 4]

The occupant-restraining device according to Embodiment 2, wherein the constricted part is, in an upper surface view, recessed toward the inside of the airbag cushion on a first side rather than a second side.

### [Embodiment 5]

The occupant-restraining device according to any one of Embodiments 1 to 4, wherein the constricted part has, in side surface view:
an upwardly-curved lower part; and
an upper part extending parallel or essentially parallel to a front-rear direction of the vehicle.

### [Embodiment 6]

The occupant-restraining device according to any one of Embodiments 1 to 5, wherein with respect to the fully expanded and deployed airbag cushion, when an area between the front end part and the rear end part is specified as a first portion, second portion, and third portion along the front-rear direction of the vehicle, on the basis of changes in the cross-sectional area of a cross section orthogonal to the front-rear direction of the vehicle,
the cross-sectional area
gradually increases from the front end part to the first portion,
gradually decreases from the first portion to the second portion,
gradually decreases from the second portion to the third portion, and
gradually decreases from the third portion to the rear end part; and
the constricted part is formed in front of and behind the second portion with the second portion as a center.

### [Embodiment 7]

The occupant-restraining device according to Embodiment 6, wherein the constricted part is formed in a range from the first portion through the second portion to a portion between the second portion and the third portion.

### [Embodiment 8]

The occupant-restraining device according to any one of Embodiments 1 to 7, wherein the fully expanded and deployed airbag cushion is formed such that, when viewed from the front-rear direction of the vehicle, a cross section orthogonal to the front-rear direction of the vehicle is asymmetrical at the position of the constricted part.

### [Embodiment 9]

The occupant-restraining device according to Embodiment 8, further comprising a vehicle accessory protruding in an upper direction from the instrument panel, wherein
the asymmetrical cross section, when viewed from the front-rear direction of the vehicle, is such that a first side, where the vehicle accessory occupies a larger proportion, is more recessed toward the inside of the airbag cushion than a second side.

### [Embodiment 10]

The occupant-restraining device according to any one of Embodiments 1 to 8, further comprising a vehicle accessory protruding in an upper direction from the instrument panel, wherein
the constricted part is provided in an upper region of the instrument panel at a position in the front-rear direction of the vehicle corresponding to the position of the vehicle accessory.

### [Embodiment 11]

The occupant-restraining device according to Embodiment 9 or 10, wherein the constricted part is provided at a position contacting the vehicle accessory.

### [Embodiment 12]

The occupant-restraining device according to any one of Embodiments 1 to 11, wherein the constricted part is positioned toward the vehicle front side from the center of the airbag cushion in the front-rear direction of the vehicle in a side surface view.

### [Embodiment 13]

The occupant-restraining device according to any one of Embodiments 1 to 12, wherein the panel configuration of the airbag cushion includes:
a center panel having a portion facing the passenger during full expansion and deployment; and
a first side panel and a second side panel provided on an inner side and an outer side, respectively, of the center panel in the vehicle width direction, wherein
the first side panel and the second side panel have a recessed part for forming the constricted part.

### [Embodiment 14]

The occupant-restraining device according to Embodiment 13, wherein the center panel has:
an enlarged part expanding in the vehicle width direction; and
a gas introduction part for introducing gas from an inflator, and
the first side panel and the second side panel are joined to the center panel such that the recessed part is positioned between the enlarged part and the gas introduction part.

### [Embodiment 15]

The occupant-restraining device according to Embodiment 13 or 14, wherein the first side panel and the second side panel have corner portions that protrude toward the front of the vehicle, the corner portions being connected to a lower side forming the recessed part of a rear-side portion of the vehicle.

### [Embodiment 16]

The occupant-restraining device according to any one of Embodiments 1 to 15, wherein, in a side surface view, the length of the constricted part in the front-rear direction is 1/3 or less of the length of the airbag cushion in the front-rear direction.

### DESCRIPTION OF REFERENCE NUMERALS

10... Occupant-restraining device, 12... Airbag cushion, 14... Inflator, 16... Housing, 20... Instrument panel, 22... Windshield, 24... Navigation monitor (vehicle accessory), 31... Front end part, 32... Rear end part, 33... Constricted part, 33a... Lower part, 33b... Upper part, 34... Upper part, 35... Lower part, 36... Space, 41... First portion, 42... Second portion, 43... Third portion, 50... Center panel, 51... First side panel, 52... Second side panel, 61... First width change part, 62... First straight part, 63... Third width change part, 64... Enlarged part, 65... Fourth width change part, 66... Second straight part, 67... Fifth width change part, 68... Gas introduction part, 71, 72... Recessed part, 71a... Front part, 71b... Rear part, 71c... Upper part, 81, 82... Vent hole, 110... Occupant-restraining device, 120... Airbag cushion, 150... Center panel, 151... First side panel, 152... Second side panel, 162... First straight part, 163... Third width change part, 200, 202... Notch part, 133: Constricted part, 133a... Lower part, 172... Recessed part, 710... Bottom part, 720... Corner portion, P... Passenger

## Claims

1. An occupant-restraining device, comprising an airbag cushion that expands and deploys in the event of a vehicle emergency from an instrument panel located at the front of a vehicle inside the vehicle cabin toward a passenger, wherein
the fully expanded and deployed airbag cushion has, in a side surface view:
a front end part on a front side of the vehicle;
a rear end part on an opposite side from the front end part; and
a constricted part positioned between the front end part and the rear end part and in an upper region of the instrument panel.

2. The occupant-restraining device according to claim 1, wherein the constricted part is, in side surface view, constricted toward the inside of the airbag cushion at a lower part rather than an upper part.

3. The occupant-restraining device according to claim 1, wherein the constricted part is, in an upper surface view, recessed toward the inside of the airbag cushion on one side as compared to another side.

4. The occupant-restraining device according to claim 2, wherein the constricted part is, in an upper surface view, recessed toward the inside of the airbag cushion on a first side rather than a second side.

5. The occupant-restraining device according to any one of claims 1 to 4, wherein the constricted part has, in side surface view:
an upwardly-curved lower part; and
an upper part extending parallel or essentially parallel to a front-rear direction of the vehicle.

6. The occupant-restraining device according to any one of claims 1 to 4, wherein with respect to the fully expanded and deployed airbag cushion, when an area between the front end part and the rear end part is specified as a first portion, second portion, and third portion along the front-rear direction of the vehicle, on the basis of changes in the cross-sectional area of a cross section orthogonal to the front-rear direction of the vehicle,
the cross-sectional area
gradually increases from the front end part to the first portion,
gradually decreases from the first portion to the second portion,
gradually decreases from the second portion to the third portion, and
gradually decreases from the third portion to the rear end part; and
the constricted part is formed in front of and behind the second portion with the second portion as a center.

7. The occupant-restraining device according to claim 6, wherein the constricted part is formed in a range from the first portion through the second portion to a portion between the second portion and the third portion.

8. The occupant-restraining device according to any one of claims 1 to 4, wherein the fully expanded and deployed airbag cushion is formed such that, when viewed from the front-rear direction of the vehicle, a cross section orthogonal to the front-rear direction of the vehicle is asymmetrical at the position of the constricted part.

9. The occupant-restraining device according to claim 8, further comprising a vehicle accessory protruding in an upper direction from the instrument panel, wherein
the asymmetrical cross section, when viewed from the front-rear direction of the vehicle, is such that a first side, where the vehicle accessory occupies a larger proportion, is more recessed toward the inside of the airbag cushion than a second side.

10. The occupant-restraining device according to claim 8, further comprising a vehicle accessory protruding in an upper direction from the instrument panel, wherein
the constricted part is provided in an upper region of the instrument panel at a position in the front-rear direction of the vehicle corresponding to the position of the vehicle accessory.

11. The occupant-restraining device according to claim 9, wherein the constricted part is provided at a position contacting the vehicle accessory.

12. The occupant-restraining device according to any one of claims 1 to 4, wherein the constricted part is positioned toward the vehicle front side from the center of the airbag cushion in the front-rear direction of the vehicle in side surface view.

13. The occupant-restraining device according to any one of claims 1 to 4, wherein the panel configuration of the airbag cushion includes:
a center panel having a portion facing the passenger during full expansion and deployment; and
a first side panel and a second side panel provided on an inner side and an outer side, respectively, of the center panel in the vehicle width direction, wherein
the first side panel and the second side panel have a recessed part for forming the constricted part.

14. The occupant-restraining device according to claim 13, wherein the center panel has:
an enlarged part expanding in the vehicle width direction; and
a gas introduction part for introducing gas from an inflator, and
the first side panel and the second side panel are joined to the center panel such that the recessed part is positioned between the enlarged part and the gas introduction part.

15. The occupant-restraining device according to claim 13, wherein the first side panel and the second side panel have corner portions that protrude toward the front of the vehicle, the corner portions being connected to a lower side constituting the recessed part of a rear-side portion of the vehicle.
